Europäisches Patentamt

(19) European Patent Office

Office européen des brevets

(11) Publication number: **0 139 146**
**B1**

(12) EUROPEAN PATENT SPECIFICATION

(45) Date of publication of patent specification: **27.06.90**

(21) Application number: **84109820.5**

(22) Date of filing: **17.08.84**

(60) Divisional application **89101031.6** filed on **17/08/84.**

(51) Int. Cl.⁵: **G 11 B 23/03**

(54) Recording disc cartridge.

(30) Priority: **24.08.83 JP 155233/83**

(43) Date of publication of application:
**02.05.85 Bulletin 85/18**

(45) Publication of the grant of the patent:
**27.06.90 Bulletin 90/26**

(84) Designated Contracting States:
**DE FR GB**

(56) References cited:
**FR-A-2 398 366**
**GB-A-2 082 371**

(73) Proprietor: **Hitachi Maxell Ltd.**
**No 1-1-88, Ushitora Ibaraki-shi**
**Osaka-fu (JP)**
(73) Proprietor: **Mitsumi Electric Company Ltd.**
**8-8-2, Kokuryo-cho**
**Chofu-shi Tokyo (JP)**

(72) Inventor: **Yoshitake, Kato Hitachi Maxell, Ltd.**
**Shihoryo**
**1468-5, Furumagi Ishigemachi**
**Yuki-gun Ibaragi (JP)**
Inventor: **Mitsuaki, Naoi**
**2-13-16, Todoroki**
**Setagaya-ku Tokyo (JP)**

(74) Representative: **Selting, Günther, Dipl.-Ing. et al**
**Deichmannhaus am Hauptbahnhof**
**D-5000 Köln 1 (DE)**

Courier Press, Leamington Spa, England.

## Description

In a conventional recording disc cartridge, the top section and the bottom section are not shaped completely same although they have almost similar shape partly because they are fitted together by engagement of projected walls formed on the peripheral part of one of the half cases with recesses defined on another half case corresponding to the projected walls and partly because the detection notches on the both half cases are defined out of the center line of the disc case. Therefore, in the manufacturing process, two kinds of molds must be independently provided for the both half cases and the top half case and the bottom half case are independently molded and in turn each top half case and each bottom half case thus formed must be assembled together one by one, thereby resulting in complicated works of assembling with expensive production cost in addition to a troublesome production control.

The present invention relates to a recording disc cartridge of the type as mentioned in the precharacterizing part of claim 1.

Such a recording disc cartridge is known from GB—A—2 082 371. In the known cartridge, each of the bottom half case and the top half case has two pairs of connecting bosses. One of said connecting bosses is positioned in the front portion of the disc case and the other pair is positioned at the rearward portion. In assembling the two half cases, the bosses of the half cases come into mutual engagement to maintain the half cases in a fixed position. When the bosses on the rear portion of the case have the same close fitting as the bosses on the front portion, assembling of the half cases may be difficult when not all of the bosses of the top half case are in precise alignment with the corresponding bosses of the bottom half case. Further, a close fit of each pair of bosses may cause mechanical stresses in the half case. If a cartridge is inserted into a reproducing apparatus with its front portion ahead so that the front surface of the cartridge case contacts a holder in the reproducing apparatus. Thereby, the positioning of the cartridge case is performed within the reproducing apparatus. At such position, the drive shaft of the reproducing apparatus must be correctly fitted into the drive shaft insertion hole of the tape cartridge. If there is any displacement between the front surface of the top half and the front surface of the bottom half, a correct positioning of the cartridge cannot be expected.

FR—A—2 398 366 describes a protective case for housing a plurality of recording discs. Said case has a bottom half constituting a case, and a top half constituting a removable cover. In such a casing, the discs are positioned standing upright, i.e. with one half of the discs contained in the lower case and the other half being contained in the upper half case. On one side, one half case has a tongue extending into a notch of the other half case. On the other side, the second half case has a tongue that extends into a notch of the first half case.

It is an object of the present invention to provide a recording disc cartridge of the type as mentioned in the precharacterizing part of claim 1, wherein the half cases can be easily and accurately assembled.

This object is solved, according to the present invention, with the features of the characterizing part of claim 1.

Figure 1 is an exploded view showing one embodiment of a recording disc cartridge according to the present invention,

Figure 2 is a top plan view showing a half section of the recording disc cartridge according to the present invention,

Figure 3 is a cross sectional view taken along the lines A—A in Figure 2,

Figure 4 is a cross sectional view taken along the lines B—B in Figure 2,

Figure 5 is a cross sectional view taken along the lines C—C in Figure 2,

Figure 6 is a partial enlarged side view in which two half sections are assembled together,

Figure 7 is a cross sectional view of a recording disc cartridge formed by assembling the two half sections shown in Figure 2 with the cross section taken along the lines A—A in Figure 2,

Figure 8 is a plan view showing inside of a second example of a half section of the recording disc cartridge according to the present invention,

Figure 9 is a partial plan view showing another example of a half section of the recording disc cartridge according to the present invention.

Detailed Description of the Preferred Embodiments

Before the description proceeds, it is noted that like parts are designated by like reference numerals throughout the attached drawings.

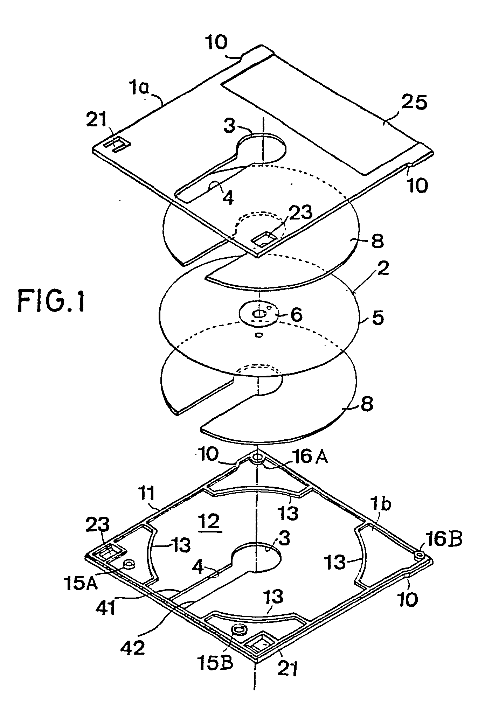

Referring to Figures 1 to 7, the recording disc cartridge of the first embodiment of the present invention comprises the disc case 1 having a generally flat rectangular shape in plan view and the magnetic or optical recording disc 2 rotatably accommodated in the disc case 1. The disc case 1 is composed of the top half case 1a and the bottom half case 1b each made of plastic resin, and formed generally in the flat plate with the four peripheral sides surrounded by low vertical peripheral walls 11. The top half case 1a and the bottom half case 1b are assembled together with the bottom face of the peripheral walls 11 of the top half case 1a abutted to the corresponding top face of the peripheral walls 11 of the bottom case 1b so as to provide a flat space for accommodation of the recording disc 2. On the central portion of the both top and bottom half cases 1a and 1b, there are defined a pair of drive shaft insertion holes 3 through the both half cases with a pair of elongated head insertion holes 4 defined extending from the drive shaft insertion holes toward the front portion of the disc case 1.

The recording disc 2 is formed by a magnetic recording sheet 5 of an annular shape and a hub 6 fixed on the central part of the recording sheet 5 with the top end face and the bottom end face of the hub faced to the drive shaft insertion holes 3. Upon mounting of the recording disc cartridge on a disc drive apparatus, the recording disc 2 can be rotated by rotation of the disc drive members of the disc drive apparatus clamping the hub 6, so that the recording disc 2 slidingly rotates on the cleaning sheets 8 of non woven sheet laid on the inner surfaces of the top and bottom half cases 1a and 1b.

In the recording disc cartridge as mentioned above the top half case 1a and the bottom half case 1b have a completely same shape.

The rear portions of the top half case 1a and the bottom half case 1b are provided with a pair of projected portions 10 expanded symmetrically in the right and left directions and the rear portion of the half case is wider than the front portion of the half case for preventing an erroneous mounting of the disc case 1 on the disc drive apparatus with the front side of the disc case wrongly taken as the rear side thereof.

The peripheral walls 11 are formed on the respective peripheral edges of the top half case 1a and the bottom half case 1b and four arcuated partition walls 13 are formed conforming to the outermost circle of the recording disc 2 at the respective corner portions of the disc case 1 so as to provide a disc receiving chamber 12. The lower faces of the respective walls 11 and 13 of the top half case 1a are contacted with the upper faces of the walls 11 and 13 of the bottom half case 1b upon assembling of the both halves.

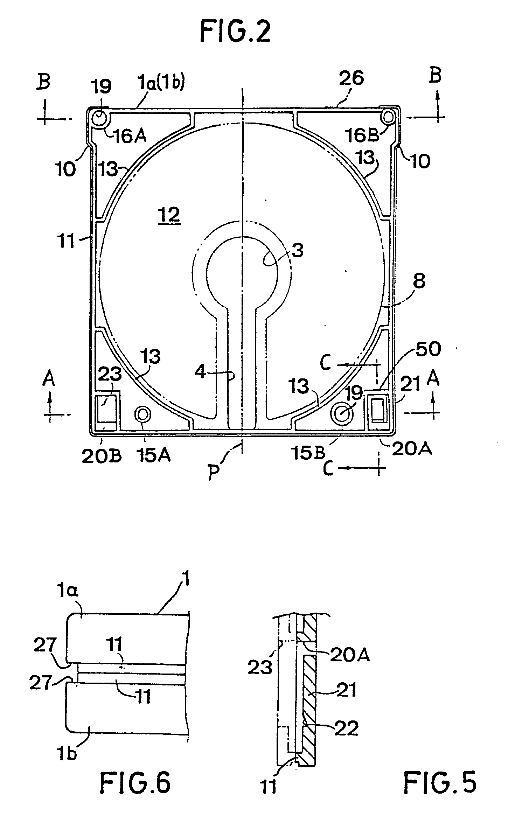

In the respective half cases 1a and 1b, each of the drive insertion holes 3 is piercingly defined in an annular shape at the central portion of the disc receiving chamber 12 with the head insertion hole 4 communicating with the drive shaft insertion hole 3 so as to extend toward the front portion of the disc case 1 in connection with the center of the lateral direction or left and right direction of the disc case 1. The peripheral edges 41 and 42 defining the head insertion hole 4 run parallelly with an equal distance to the phantom line P (see Figure 2) running in the longitudinal direction of the disc case 1 passing the center of the drive shaft insertion hole 3 and perpendicularly intersecting with the front edge of the disc case 1. Since the head insertion hole 4 is communicated with the drive shaft insertion hole 3 and extending up to the inner edge of the peripheral wall 11, a possible stroke of the head of the disc drive apparatus can be expanded so that the recording capacity of the disc cartridge can be increased. The center of the drive shaft insertion hole 3 must be coincided with the center relative to the lateral direction of the disc case but it is not essential to define the center of the drive shaft insertion hole 3 at the center relative to the longitudinal direction of the disc case 1.

A plurality of connecting bosses 15A, 15B, 16A and 16B are projectingly formed on the inner surface of each of the halves 1a and 1b for connecting the top half case 1a and the bottom half case 1b. The bosses 15A and 15B situated at the rear portion of the disc case make one pair and the bosses 16A and 16B make another pair.

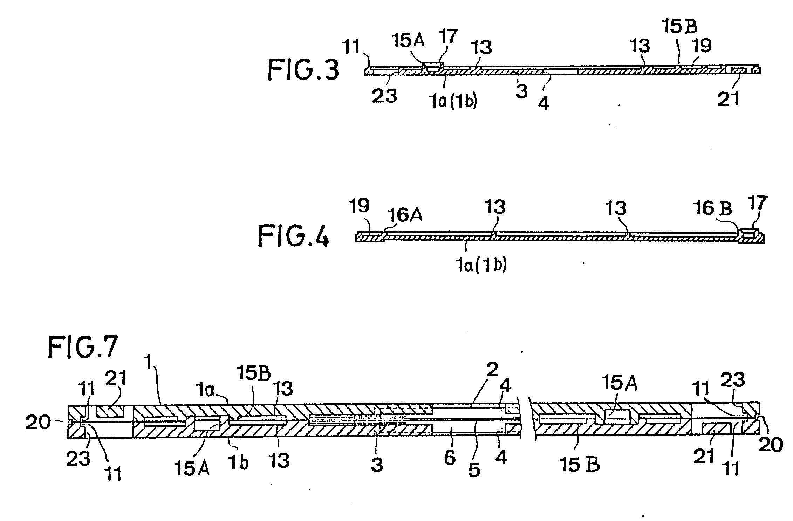

Referring to Figures 2 and 3, the left connecting boss 15A is a cylindrical column having a funnel shaped opening 17 at the top end portion and if taller than the top butting face of the peripheral wall 11 of the top half case 1a (or 1B). The right connecting boss 15B has a hole 19 engageable with the boss 15A of the other half case with a height equal to the top level of the peripheral wall 11. The connecting bosses 15A and 15B are disposed at the symmetrical position relative to the phantom line P.

Referring to Figures 2 and 4, the connecting bosses 16A and 16B are disposed at the symmetrical position relative to the phantom line P similar to the connecting bosses 15A and 15B, and the connecting boss 16A has the same configuration of the connecting boss 15B having the hole 19 and the connecting boss 16B is formed in the same manner as the shape of the connecting boss 15A having the funnel shaped opening 17. It is noted that the connecting bosses 15A and 15B on the front side of the both top halves 1a and 1b are closely fitted, to the contrary, the connecting bosses 16A and 16B are loosely fitted.

A partition wall 50 is provided at the corner where the connecting boss 15B exists so as to provide a small chamber 20, wherein an erase preventing chip 21 is formed by cutting the part of the half section in a U character shape. A shallow slot 22 is formed at the root of the chip 21 so as to facilitate to manually separate the chip 21 from the half case for preventing erase of the record.

In Figure 1, a shallow rectangular recess 25 is formed on the top face of the top half case 1a for fitting a label and in Figure 2, reference numeral 26 denotes a gate for injection of plastic resin when injection molding.

The top half case 1a and the bottom half case 1b are assembled together in such a manner as described below.

The cleaning liners 8 are laid in the inner surfaces of the disc receiving chamber 12 with the opening of the cleaning sheet 8 coincided with the head insertion hole 4 and then secured by a thermal welding or a supersonic welding or adhering material. Subsequently the recording disc 2 is put on the disc receiving chamber 12 of the bottom half case 1b with the hub 6 opposed to the drive shaft insertion hole 3. Then the top half case 1a to which the cleaning sheet was already secured is assembled to the bottom half case 1b fitting the connecting bosses 15A and 15B situated at the front portion of the both halves 1a and 1b, thereby positioning between the both halves 1a and 1b is made, and in turn the connecting bosses 16A and 16B situated at the rear portion of the both halves 1a and 1b are fitted.

It is appreciated that since the connecting bosses 15A, 15B, 16A and 16B are disposed symmetrically relative to the phantom center line P and the peripheral walls 11 and the partition walls 13 are also in the same relation, two half cases having an exactly same configuration can be used for the top case half 1a and the bottom case half 1b for forming the case body 1.

Since the connecting bosses 16A and 16B on the rear portion of the both halves 1a and 1b are fitted looser than the fitting between the connecting bosses 15A and 15B on the both halves 1a and 1b, in addition to the manner of engagement between the connecting bosses 16A and 16B on the rear portion of the both halves 1a and 1b is inverse of the manner of engagement between the connecting bosses 15A and 15B on the front portion, the top half case 1a and the bottom half case 1b can be smoothly assembled with a high accuracy preventing an erroneous assembling in such a manner that the two half cases are assembled in a reversed manner.

By assembling the top half case 1a and the bottom half case 1b as described above, the top faces of the peripheral walls 11 and the partition walls 13 of the bottom section 1b closely contact onto the bottom faces of those in the top section 1a and the ends of the connecting bosses 15A and 16B of the top half case 1a contact onto the bottom faces of the holes 19 of the connecting bosses 15B and 16A of the bottom half case 1b, then the both halves can be securely connected by the ultrasonic welding method. Since there are formed the funnel shaped openings 17 on the end portion of the connecting bosses 15A and 16B, the welding can be well performed. In welding, if there is a partly butting portion on the ends of the walls 11 and 13, there may occur flash. To prevent this, the peripheral walls 11 are formed with the inner part thereof high and the outer part thereof to be downwardly stepped as shown by 27 in Figure 6 so as to prevent the occurrence of the flash whereby the both halves 1a and 1b can be secured between the butting faces of the peripheral walls 11.

Said stepped portions 27 may be formed on the left and right peripheral walls, the front peripheral wall and the part of the rear peripheral wall adjacent to the connecting bosses 16A and 16B as shown in Figure 2. However, such stepped portion 27 may be formed only the four corners of the both halves adjacent to the connecting bosses.

In the embodiment as described above, the distance between the two connecting bosses 15A and 15B in the front portion is different from the distance between the connecting bosses 16A and 16B for preventing erroneous assembling of the both halves 1a and 1b, however, the value of the distance is not limited to the distance shown in this embodiment.

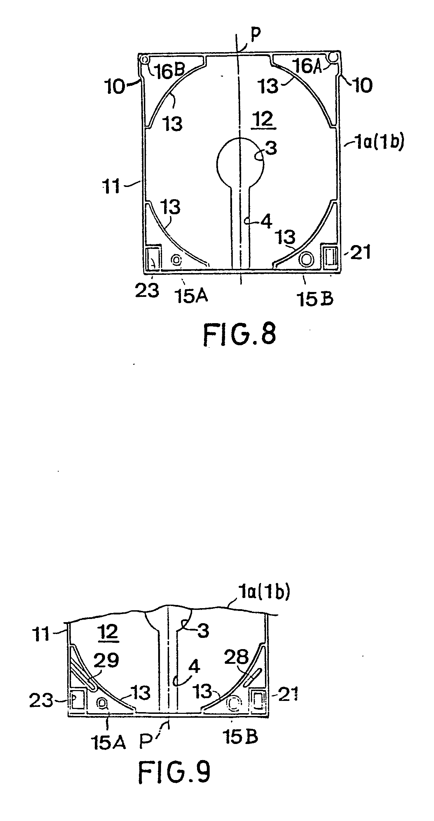

The relation of the engagement of the connecting bosses 16A and 16B on the rear portion of the half cases 1a and 1b may be the same as the relation of the engagement between the connecting bosses 15A and 15B as shown in Figure 8 so far as the engagement of the connecting bosses is performed by the engagement between the projection and the recess.

Furthermore, as shown in Figure 9, there may be formed a rib like positioning projection 28 and a positioning slot 29 for engagement of the projection 28, so as to assure the correct positioning of the top half case 1a and the bottom half case 1b.

The present invention can be applied to optical recording disc cartridges and/or recording disc cartridges having shutter means for open and close the head insertion hole 4.

It is appreciated that the recording disc cartridge can be manufactured by the same mold for the top half case and the bottom half case since they have symmetrical configuration, thereby resulting in reducing the manufacturing cost.

It is also appreciated that in manufacturing the recording disc cartridge the manufacturing process schedule can be simplified by commonly using only one kind of the half case for the top half case and the bottom half case.

## Claims

1. A recording disc cartridge which comprises a disc case composed of a top half case (1a) and a bottom half case (1b) each half case being provided with peripheral walls (11) formed on the disc case (1), a drive shaft insertion hole (3) defined on the central portion of the half case and a head insertion hole (4) defined on a portion apart from said drive shaft insertion hole in the frontward direction on the central portion of the disc case relative to the left and right direction, each of the said top half case (1a) and said bottom half case (1b) being provided with two pairs of connecting bosses (15A, 15B; 16A, 16B) in such a manner that the connection bosses of one of the half cases are engageable with the corresponding connecting bosses of the other half case, wherein one pair of connecting bosses (15A, 15B) is situated on the front portion of the disc case (1) and the other pair (16A, 16B) is situated on the rear portion of the disc case, characterized in that said connecting bosses (15A, 15B) situated on the front portion have a close fitting and the connecting bosses (16A, 16B) situated on the rear portion have a fitting looser than the fitting of the connecting bosses on the front portion.

2. The recording disc cartridge according to claim 1, wherein said head insertion hole is communicated with the drive shaft insertion hole.

3. The recording disc cartridge according to claim 1 or 2, characterized in that the connecting bosses are disposed in a symmetrical position relative to a phantom line (P) passing the center of the head insertion hole (3) and the center of the drive shaft insertion hole (4).

4. The recording disc cartridge according to one of claims 1—3, wherein one (15A) of the pair of said connecting bosses (15A, 15B) is a cylindrical boss having a height higher than the peripheral walls of the half case and the other connecting boss (15B) is defined with a hole in such a manner that when both half cases (1a, 1b) are assembled together, said hole of the other connecting boss (15B) of one of the half cases is engageable with the cylindrical boss (15A) formed on the other half case.

5. The recording disc cartridge according to one of claims 1—4, wherein said connecting bosses are securely connected by a supersonic welding.

6. The recording disc cartridge according to one of claims 1—5, wherein portions of the peripheral walls (11) are provided with a stepped portion (27) downwardly stepped outward.

**Patentansprüche**

1. Aufzeichnungsplattenkassette mit einem Plattengehäuse, das aus einer oberen Gehäusehälfte (1a) und einer unteren Gehäusehälfte (1b) zusammengesetzt ist, wobei jede Gehäusehälfte mit an dem Plattengehäuse (1) ausgebildeten Umfangswänden (11), einem im Mittenbereich der Gehäusehälfte ausgebildeten Antriebswelleneinführloch (3) und einem Kopfeinführloch (4) versehen ist, das in einem von dem Antriebswelleneinführloch nach vorne hin abgesetzen Bereich im bezüglich der linken und der rechten Richtung mittleren Teil des Plattengehäuses ausgebildet ist, wobei sowohl die obere Gehäusehälfte (1a), als auch die untere Gehäusehälfte (1b) mit zwei Paaren von Verbindungsansätzen (15A, 15B; 16A, 16B) derart versehen sind, daß die Verbindungsansätze einer der Gehäusehälften mit den entsprechenden Verbindungsansätzen der anderen Gehäusehälfte in Eingriff gebracht werden können, wobei ein Verbindungsansatzpaar (15A, 15B) im vorderen Bereich des Plattengehäuses (1) und das andere Verbindungsansatzpaar (16A, 16B) im hinteren Bereich des Plattengehäuses angeordnet ist, dadurch gekennzeichnet, daß die im vorderen Bereich befindlichen Verbindungsansätze (15A, 15B) eine enge Passung aufweisen und die im hinteren Bereich befindlichen Verbindungsansätze (16A, 16B) eine losere Passung haben, als die Verbindungsansätze im vorderen Bereich.

2. Aufzeichnungsplattenkassette nach Anspruch 1, bei der das Kopfeinführloch mit dem Antriebswelleneinführloch verbunden ist.

3. Aufzeichnungsplattenkassette nach Anspruch 1 oder 2, dadurch gekennzeichnet, daß die Verbindungsansätze symmetrisch zu einer gedachten Linie (P) angeordnet sind, die durch die Mitte des Kopfeinführlochs (3) und die Mitte des Antriebswelleneinführlochs (4) verläuft.

4. Aufzeichnungsplattenkassette nach einem der Ansprüche 1—3, bei der ein Ansaz (15A) des Verbindungsansatzpaares (15A, 15B) ein zylindrischer Ansatz ist, der höher ist als die Umfangswände der Gehäusehälfte und der andere Verbindungsansatz (15B) derart mit einem Loch ausgebildet ist, daß, wenn beide Gehäusehälften (1a, 1b) zusammengesetzt werden, das Loch des anderen Verbindungsansatzes (15B) der einen der Gehäusehälften mit dem an der anderen Gehäusehälfte ausgebildeten zylindrischen Ansatz (15A) zusammengreift.

5. Aufzeichnungsplattenkassette nach einem der Ansprüche 1—4, bei der die Verbindungsansätze durch Ultraschallschweißen fest verbunden sind.

6. Aufzeichnungsplattenkassette nach einem der Ansprüche 1—5, bei der Teile der Umfangswände (11) mit einem nach unten auswärts abgestuften Bereich (27) versehen sind.

**Revendications**

1. Cassette pour disque d'enregistrement, comportant un boîtier de disque constitué d'une moitié supérieure de boîtier (1a) et d'une moitié inférieure de boîtier (1b), chaque moitié de boîtier étant munie de parois périphériques (11) façonnées sur de boîtier de disque (1), un trou d'introduction (3) d'arbre d'entraînement pratiqué sur la partie centrale de la moitié de boîtier et un trou d'introduction (4) de tête pratiqué sur une partie écartée dudit trou d'introduction d'arbre d'entraînement dans la direction antérieure sur la partie centrale du boîtier de disque par rapport à la direction gauche et droite, chacune de ladite moitié supérieure de boîtier (1a) et de ladite moitié inférieure de boîtier (1b) étant munies de deux paires de bossages de liaison (15A, 15B; 16A, 16B) de telle manière que les bossages de liaison d'une des moitiés de boîtier puissent être engagés dans les bossages de liaison correspondants de l'autre moitié de boîtier, une paire de bossages de liaison (15A, 15B) étant disposée sur la partie antérieure de boîtier de disque (1) et l'autre paire (16A, 16B) disposée sur la partie postérieure du boîtier de disque, caractérisée en ce que lesdits bossages de liaison (15A, 15B) situés sur la partie antérieure présentent un ajustement serré et les bossages de liaison (16A, 16B) disposés sur la partie postérieure possèdent un ajustement plus lâche que l'ajustement des bossages de liaison sur la partie antérieure.

2. Cassette pour disque d'enregistrement selon la revendication 1, dans laquelle ledit trou d'introduction de tête communique avec le trou d'introduction d'arbre d'entraînement.

3. Cassette pour disque d'enregistrement selon la revendication 1 ou 2, caractérisée en ce que les bossages de liaison sont disposés symétriquement par rapport à une droite imaginaire (T) passant par le centre du trou d'introduction de tête (3) et le centre du trou d'introduction (4) de l'arbre d'entraînement.

4. Cassette pour disque d'enregistrement selon l'une quelconque des revendications 1 à 3, dans laquelle l'un (15A) de la paire desdits bossages de liaison (15A, 15B) est un bossage cylindrique possédant une hauteur supérieure aux parois périphériques de la moitié de boîtier et l'autre bossage de liaison (15B) est défini par un trou de telle manière que lorsque les deux moitiés de boîtier (1a, 1b) sont assemblées l'une à l'autre, ledit trou de l'autre bossage de liaison (15B) de l'une des moitiés de boîtier puisse être engagé dans le bossage cylindrique (15A) formé sur l'autre moitié de boîtier.

5. Cassette pour disque d'enregistrement selon l'une quelconque des revendications 1 à 4, dans laquelle lesdits bossages de liaison sont rattachés à demeure par un soudage aux ultrasons.

6. Cassette pour disque d'enregistrement selon l'une quelconque des revendications 1 à 5, dans laquelle des parties des parois périphériques (11) sont munies d'une partie en échelon (27) dirigée vers le bas et vers l'extérieur.

FIG.1

## FIG.2

## FIG.6

## FIG.5

FIG.3

11 15A 17 13 13 15B
19

23 1a(1b) 3 4 21

FIG.4

19 16A 13 13 16B 17

1a(1b)

FIG.7

1 2
11 21 1a 15B 13 4 15A 11 23

20

23 11 15A 1b 13 3 6 5 4 15B 21 11 20

FIG.8

FIG.9